# EUROPÄISCHE PATENTSCHRIFT

(11) **EP 1 328 733 B1**
(45) Veröffentlichungstag und Bekanntmachung des Hinweises auf die Patenterteilung: **14.12.2005**
(21) Anmeldenummer: 01976313.5
(22) Anmeldetag: 16.10.2001
(51) Int. Cl.: F16C 29/06

(54) **LINEARWÄLZLAGER**
LINEAR ROLLING BEARING
ROULEMENT LINEAIRE

(30) Priorität: 25.10.2000 DE 10052848
(43) Veröffentlichungstag der Anmeldung: 23.07.2003
(73) Patentinhaber: INA- Schaeffler KG, 91074 Herzogenaurach (DE)
(72) Erfinder: WIEHL, Hermann, 91074 Herzogenaurach (DE)
(86) Internationale Anmeldenummer: PCT/EP2001/011951
(87) Internationale Veröffentlichungsnummer: WO 2002/035107

(56) Entgegenhaltungen:
- EP-A- 0 085 292
- EP-A- 0 692 646
- US-A- 3 845 993
- US-A- 4 304 443
- US-A- 5 640 768
- PATENT ABSTRACTS OF JAPAN vol. 1997, no. 03, 31. März 1997 (1997-03-31) & JP 08 312644 A (THK KK), 26. November 1996 (1996-11-26)

## Beschreibung

### Gebiet der Erfindung

Die Erfindung betrifft ein Linearwälzlager mit einer Führungsschiene und einem Tragkörper, der die Führungsschiene teilweise umgreift und an dieser über als tragende Wälzkörper wirkende Kugeln längsverschieblich abgestützt ist, wobei er einen Grundkörper aus einem Formwerkstoff, z. B. einem Kunststoff oder einer Druckgusslegierung, sowie Blechteile enthält, welche an dem Formwerkstoff anliegen und Laufbahnen für die Kugeln aufweisen.

### Hintergrund der Erfindung

Der Markt für Stellbewegungen einfacher Art wird größer. Es werden daher preiswerte Linearführungen benötigt, darunter auch solche, bei denen es auf die Präzision und Steifigkeit nicht in erster Linie ankommt. Aus der Druckschrift EP 0 558 761 B1 ist ein Linearwälzlager mit einem Tragkörper bekannt, bei welchem Lastkugelrillen an einer dünnen Kugelplatte angeordnet sind. Diese ist mit einer zusätzlichen Befestigungsplatte über einen Formwerkstoff einstükkig ausgebildet, was durch eine Einspritzformung erfolgen kann. Diese Ausführung mit einer Kugelplatte und einer Befestigungsplatte ist nicht nur konstruktiv aufwendig, sie hat auch den Nachteil, dass die Kugeln beim Abnehmen des Tragkörpers von der Führungsschiene aus den Lastkugelrillen herausfallen, weil sie von diesen auf einem nur geringen Umfangsbereich umgeben werden.

### Zusammenfassung der Erfindung

Die Erfindung zielt darauf ab, die den bekannten Lagern anhaftenden verschiedenen Nachteile zu beseitigen und eine Linearführung anzugeben, die bei nur geringen Herstellungskosten einen kleinen Bauraum und ein geringes Gewicht aufweist.

Diese Aufgabe wird erfindungsgemäß dadurch gelöst, dass jedes Blechteil einen jeweils eine Laufbahn enthaltenden, im Querschnitt kreisbogenförmigen Endbereich aufweist, welcher der Führungsschiene benachbart und zu dieser hin geöffnet ist, dessen Durchmesser dem Durchmesser der Kugeln entspricht und dessen Bogenmaß größer als 180° ist. Auf diese Weise ist es möglich, die Blechteile, die spanlos hergestellt werden können, und den Grundkörper des Tragkörpers getrennt voneinander herzustellen. Der Grundkörper kann aus Kunststoff hergestellt und die Blechteile können auf den Grundkörper aufgeklipst oder formschlüssig mit diesem verbunden werden. Beide Varianten ermöglichen eine einfache und schnelle werkzeugfreie Montage.

Der Tragkörper kann zwei deckungsgleiche Blechteile enthalten, die jeweils zu einer der beiden Längsseiten der Führungsschiene benachbart angeordnet sind. Dadurch, dass der kreisbogenförmige Endbereich jedes Blechteils, an dem die Laufbahn ausgebildet ist, ein Bogenmaß bzw. einen Mittelpunktswinkel von mehr als 180° aufweist, können aus ihm beim Abnehmen des Tragkörpers von der Führungsschiene die Kugeln nicht herausfallen.

### Kurze Beschreibung der Zeichnung

Ausführungsbeispiele der Erfindung sind in der Zeichnung dargestellt und werden im folgenden näher beschrieben.

Es zeigen
- Figur 1: eine Unteransicht des Tragkörpers eines erfindungsgemäßen Linearwälzlagers gemäß Linie I-I der Figur 2;
- Figur 2: einen Querschnitt durch ein erfindungsgemäßes Linearwälzlager;
- Figur 3: einen Querschnitt durch ein erfindungsgemäßes Linearwälzlager mit einem gegenüber Figur 2 abgewandelten Tragkörper;
- Figur 4: einen Lagerbereich in einem vergrößerten Ausschnitt aus dem Linearwälzlager nach Figur 2.

### Ausführliche Beschreibung der Zeichnung

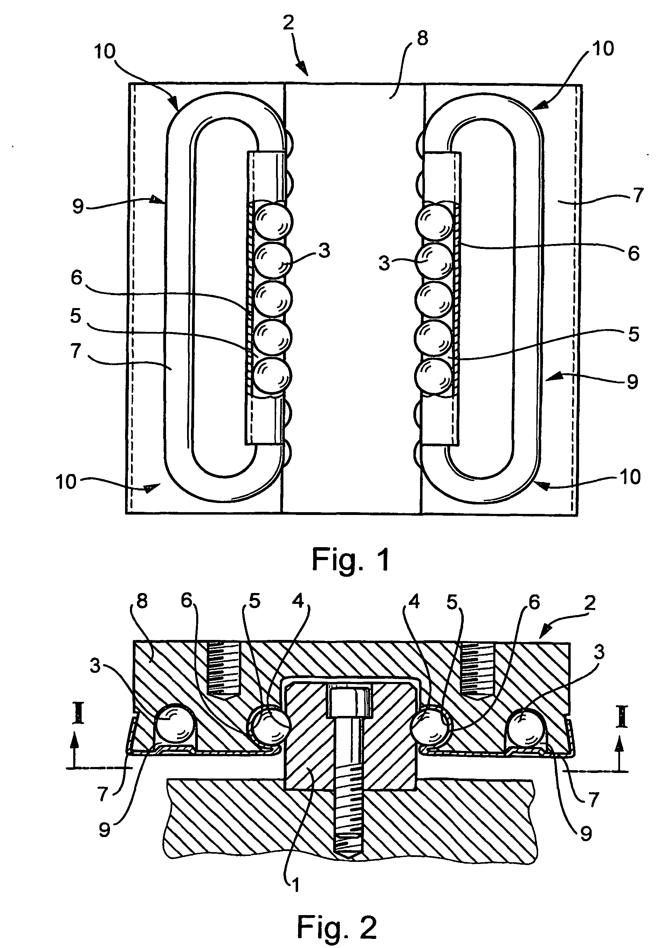

Ein in den Figuren 1, 2 und 4 dargestelltes erfindungsgemäßes Linearwälzlager besteht aus einer Führungsschiene 1 und einem diese teilweise umgreifenden Tragkörper 2. Dieser ist über als Kugeln 3 ausgebildete Wälzkörper an den beiden Längsseiten der Führungsschiene 1 abgestützt, wobei die Kugeln 3 in Laufbahnen 4 der Führungsschiene 1 und in Laufbahnen 5 des Tragkörpers 2 abrollbar angeordnet sind.

Die Laufbahnen 5 sind jeweils von der inneren Oberfläche eines im Querschnitt kreisringförmigen Endbereichs 6 eines Blechteils 7 gebildet, Der Tragkörper 2 enthält einen Grundkörper 8 aus einem Formwerkstoff, welcher die Führungsschiene 1 teilweise umgreift, und zwei den beiden Längsseiten der Führungsschiene 1 benachbarte Blechteile 7, die an dem Grundkörper 8 durch Aufklipsen befestigt sind.

Die Kugeln 3 sind in dem Tragkörper 2 in zwei endlosen Umläufen angeordnet, wobei jeder Umlauf eine Reihe zwischen dem Tragkörper 2 und der Führungsschiene 1 angeordneter tragender Kugeln 3, eine Reihe in Rücklaufkanälen 9 angeordneter rücklaufender Kugeln 3 und zwei diese Reihen miteinander verbindenden, Kugeln 3 enthaltende Umlenkkanäle 10 aufweist. Die Rücklaufkanäle 9 und die Umlenkkanäle 10 sind in dem Grundkörper 8 angeordnet und wären in Figur 2 ohne die Blechteile 7 nach unten geöffnet. Die an dem Grundkörper 8 aufgeklipsten Blechteile 7 übemehmen das Schließen der Rücklaufkanäle 9 und der Umlenkkanäle 10 nach außen.

Außerdem halten die Blechteile 7 in ihren Endbereichen 6 die Kugeln 3, weil ihr Mittelpunktswinkel α größer als 180° ist und der Kugeldurchmesser dem Innendurchmesser der Endbereiche entspricht. Bei der Abnahme des Tragkörpers 2 von der Führungsschiene 1 können die Kugeln daher nicht aus den Blechteilen 7 herausfallen.

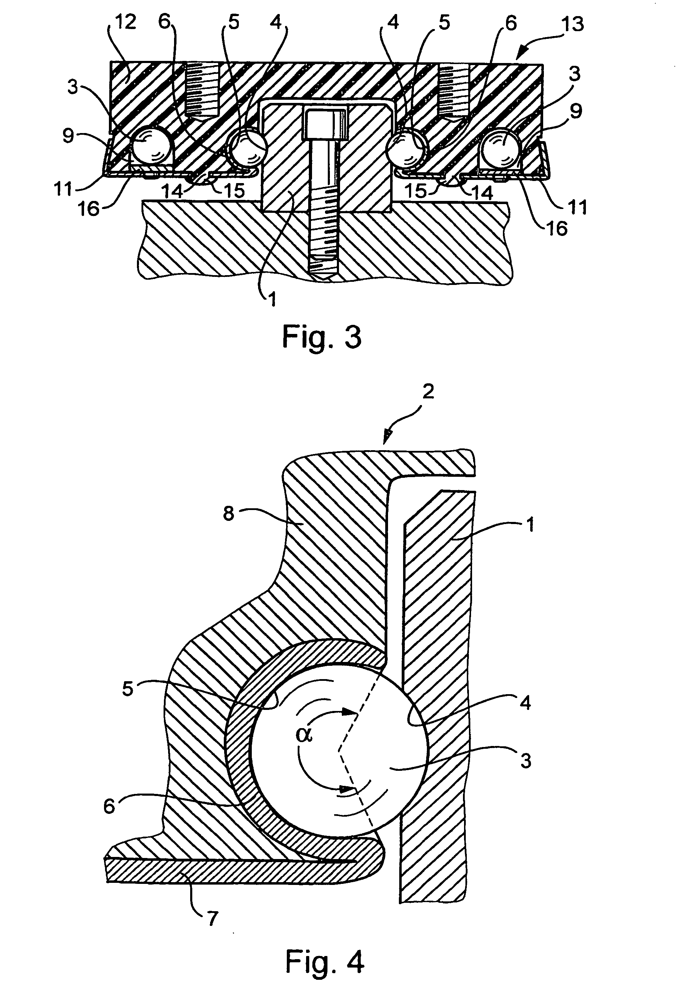

Ein in Figur 3 dargestelltes Linearwälzlager ist grundsätzlich ebenso aufgebaut. Es unterscheidet sich von dem Lager nach Figur 2 dadurch, dass seine beiden die Endbereiche 6 aufweisenden Blechteile 11 nicht auf den Grundkörper 12 des Tragkörpers 13 aufgeklipst sind. Sie weisen durchgehende Ausnehmungen 14 auf, durch welche ein Teil des Formwerkstoffs des Grundkörpers 12 hindurchgetreten ist und an den Außenseiten der Blechteile 11 Wülste 15 bildet. Diese halten die Blechteile 11 in der Anlage an dem Grundkörper 12 fest.

Bei dieser Ausführung laufen die Kugeln 3 in der unbelasteten Zone im Rücklaufkanal 9 jeweils auf einem dort eingelegten Kunststoffband 16, wodurch eine Dämpfung der Kugelumläufe bewirkt wird.

### Bezugszeichen

- 1: Führungsschiene
- 2: Tragkörper
- 3: Kugel
- 4: Laufbahn
- 5: Laufbahn
- 6: Endbereich
- 7: Blechteil
- 8: Grundkörper
- 9: Rücklaufkanal
- 10: Umlenkkanal
- 11: Blechteil
- 12: Grundkörper
- 13: Tragkörper
- 14: Ausnehmung
- 15: Wulst
- 16: Kunststoffband
- α: Bogenmaß

## Patentansprüche

1. Linearwälzlager mit einer Führungsschiene (1) und einem Tragkörper (2, 13), der die Führungsschiene (1) teilweise umgreift und an dieser über als tragende Wälzkörper wirkende Kugeln (3) längsverschieblich abgestützt ist, wobei er einen Grundkörper (8, 12) aus einem Formwerkstoff, z. B. einem Kunststoff oder einer Druckgußiegierung, sowie Blechteile (7, 11) enthält, welche an dem Formwerkstoff anliegen und Laufbahnen (5) für die Kugeln (3) aufweisen, **dadurch gekennzeichnet, dass** jedes Blechteil (7, 11) einen jeweils eine Laufbahn (5) enthaltenden, im Querschnitt kreisbogenförmigen Endbereich (6) aufweist, welcher der Führungsschiene (1) benachbart und zu dieser hin geöffnet ist, dessen Durchmesser dem Durchmesser der Kugeln (3) entspricht und dessen Bogenmaß (α) größer als 180° ist.

2. Wälzlager nach Anspruch 1, **dadurch gekennzeichnet, dass** der Tragkörper (2, 13) zwei deckungsgleiche Blechteile (7, 11) enthält, die jeweils zu einer der beiden Längsseiten der Führungsschiene (1) benachbart angeordnet sind.

3. Wälzlager nach Anspruch 1, **dadurch gekennzeichnet, dass** die Blechteile (7) auf den Grundkörper (8) des Tragkörpers (2) aufgeklipst sind.

4. Wälzlager nach Anspruch 1, **dadurch gekennzeichnet, dass** die Blechteile (11) mit dem Grundkörper (12) des Tragkörpers (13) formschlüssig verbunden sind.

5. Wälzlager nach Anspruch 1, **dadurch gekennzeichnet, dass** die Wälzkörper in dem Tragkörper (2, 13) in mehreren geschlossenen Umläufen angeordnet sind, wobei für jeden Umlauf ein Endbereich (6) eines Blechteils (7, 11) mit einer Reihe tragender Kugeln (3), sowie in dem Grundkörper (8, 12) ein Rücklaufkanal (9) mit einer Reihe rücklaufender Kugeln (3) und zwei diese Reihen miteinander verbindende Kugelumlenkkanäle (10) vorgesehen sind und die Rücklaufkanäle (9) und die Umlenkkanäle (10) in dem Grundkörper (8, 12) nach außen geöffnet und durch die angebrachten Blechteile (7, 11) verschlossen sind.

6. Wälzlager nach Anspruch 5, **dadurch gekennzeichnet, dass** in dem Tragkörper (13) bei einem Kugelumlauf jeweils in dem Rücklaufkanal (9) zwischen den Kugeln (3) und dem Blechteil (11) ein dämpfendes Kunststoffband (16) eingelegt ist.

## Claims

1. Linear rolling bearing, with a guide rail (1) and with a carrying body (2, 13) which partially surrounds the guide rail (1) and is supported longitudinally displaceably on the latter via balls (3) acting as load-bearing rolling bodies, the said linear rolling bearing containing a basic body (8, 12) consisting of a moulding material, for example a plastic or a dye-casting alloy, and also sheet-metal parts (7, 11) which bear against the moulding material and have running tracks (5) for the balls (3), **characterized in that** each sheet-metal part (7, 11) has an end region (6) which in each case contains a running track (5) and has a cross section in the form of an arc of a circle and which is adjacent to the guide rail (1) and open towards the latter, and of which the diameter corresponds to the diameter of the balls (3) and the arc dimension (α) is greater than 180°.

2. Rolling bearing according to Claim 1, **characterized in that** the carrying body (2, 13) contains two congruent sheet-metal parts (7, 11) which are arranged in each case adjacently to one of the two longitudinal sides of the guide rail (1).

3. Rolling bearing according to Claim 1, **characterized in that** the sheet-metal parts (7) are snapped onto the basic body (8) of the carrying body (2).

4. Rolling bearing according to Claim 1, **characterized in that** the sheet-metal parts (11) are positively connected to the basic body (12) of the carrying body (13).

5. Rolling bearing according to Claim 1, **characterized in that** the rolling bodies in the carrying body (2, 13) are arranged in a plurality of closed orbits, there being provided for each orbit an end region (6) of a sheet-metal part (7, 11) with a row of load-bearing balls (3) and, in the basic body (8, 12), a return channel (9) with a row of returning balls (3) and two ball deflection channels (10) connecting these rows to one another, and the return channels (9) and deflection channels (10) being open outwards in the basic body (8, 12) and being closed by means of the attached sheet-metal parts (7, 11).

6. Rolling bearing according to Claim 5, **characterized in that** a damping plastic band (16) is inserted in the carrying body (13) between the balls (3) and the sheet-metal part (11), in each case in the return channel (9), at a ball orbit.

## Revendications

1. Roulement linéaire avec un rail de guidage (1) et une enveloppe (2, 13) qui entoure partiellement le rail de guidage (1) et qui s'appuie de façon mobile en longueur sur ce dernier par l'intermédiaire de billes (3) faisant office d'éléments de roulement, le roulement contenant un corps de base (8, 12) en un matériau moulé, par exemple en une matière plastique ou en un alliage coulé sous pression, ainsi que des éléments en tôle (7, 11) qui s'appliquent sur le matériau moulé et comportent des chemins de roulement (5) pour les billes (3), **caractérisé en ce que** chaque élément en tôle (7, 11) comporte une zone d'extrémité (6) de section transversale en forme d'arc de cercle, contenant respectivement un chemin de roulement (5), qui est voisin du rail de guidage (1) et ouvert en direction de ce dernier, dont le diamètre correspond à celui des billes (3) et dont la mesure d'arc (α) est supérieure à 180°.

2. Roulement selon la revendication 1, **caractérisé en ce que** l'enveloppe (2, 13) contient deux éléments en tôle (7, 11) qui coïncident, qui sont respectivement disposés dans le voisinage de l'un des deux côtés longitudinaux du rail de guidage (1).

3. Roulement selon la revendication 1, **caractérisé en ce que** les éléments en tôle (7) sont clipsés sur le corps de base (8) de l'enveloppe (2).

4. Roulement selon la revendication 1, **caractérisé en ce que** les éléments en tôle (11) sont reliés par complémentarité de forme avec le corps de base (12) de l'enveloppe (13).

5. Roulement selon la revendication 1, **caractérisé en ce que** les éléments de roulement sont disposés dans plusieurs circuits fermé dans l'enveloppe (2, 13), pour chaque circuit, une zone d'extrémité (6) d'un élément en tôle (7, 11) avec une rangée de billes porteuses (3) et dans le corps de base (8, 12) un canal de retour (9), avec une rangée de billes rétrogrades (3) et deux canaux de renvoi des billes (10) reliant entre elles ces rangées étant prévus et les canaux de retour (9) et les canaux de renvoi (10) dans le corps de base (8, 12) étant ouverts vers l'extérieur et fermés par les éléments en tôle (7, 11) montés.

6. Roulement selon la revendication 5, **caractérisé en ce que** dans l'enveloppe (13), lors d'une circulation de billes, une bande d'amortissement en matière plastique (16) est insérée respectivement dans le canal de retour (9), entre les billes (3) et l'élément en tôle (11).
